# DEMANDE DE BREVET EUROPEEN

(11) **EP 1 541 791 A1**
(43) Date de publication de la demande: **15.06.2005**
(21) Numéro de dépôt: 04300824.2
(22) Date de dépôt: 30.11.2004
(51) Int. Cl.: E05C 17/14

(54) **Dispositif de maintien d'une béquille de support d'un capot de véhicule automobile**

(30) Priorité: 09.12.2003 FR 0314374
(71) Demandeur: Peugeot Citroen Automobiles S.A., 78140 Vélizy Villacoublay (FR)
(72) Inventeur: Crabot, Auguste, 35230 Noyal Chatillon sur Seiche (FR)
(74) Mandataire: Fernandez, Francis Lionel

(57) **Abrégé**

Dispositif de maintien d'une béquille de support (4) d'un capot de véhicule automobile, comportant une tige allongée (6), articulée à une de ses extrémités (5) sur le capot, caractérisé en ce qu'il comporte une patte (11) présentant un oeillet cylindrique (14) d'axe transversal (15) dans lequel pénètre la partie terminale droite (16) de la tige, et une agrafe (10) comprenant un corps (17) muni d'une pince (18) de fixation latérale sur la tige (6) à proximité de sa partie terminale, le corps de l'agrafe présentant un talon (17a) comportant une face plane inclinée (25), parallèle à l'axe transversal (15) de l'oeillet et propre à s'appliquer en butée sur la surface du capot (1), lequel forme alors avec la tige un angle déterminé par l'inclinaison de cette face plane.

## Description

La présente invention est relative à un dispositif de maintien en position active d'une béquille de support d'un capot de véhicule automobile.

Une telle béquille de support est d'un usage classique sur tous les véhicules actuels et consiste ordinairement, dans la forme la plus simple de réalisation, en un bras ou une tige métallique allongée, articulée à une extrémité, soit sur la carrosserie du véhicule en un point de celle-ci disposé sous le capot basculant et apte à être relevé en position active pour venir se bloquer sous ce capot en un endroit déterminé afin de le maintenir ouvert, soit sur le capot lui-même pour coopérer dans ce cas avec un moyen d'immobilisation prévu sur le bord de l'ouverture ménagée dans la carrosserie pour accéder au moteur, cette tige métallique étant appliquée contre le bord du capot ou de la carrosserie en position inactive, lorsque ce capot est verrouillé et ferme cette ouverture.

Pour dégager l'accès au moteur en relevant le capot, lui-même monté à articulation sur la carrosserie, il est usuellement prévu de manoeuvrer d'abord un levier de verrouillage qui bloque normalement le capot en position fermée au moyen d'une tirette ou similaire, munie d'une poignée de commande et qui est de préférence prévue dans l'habitacle du véhicule de manière à être aisément atteinte par le conducteur, le capot étant alors libéré et pouvant être relevé autour de son articulation.

Toutefois, lorsque ce capot est basculé vers le haut, il est nécessaire de le maintenir en position pour laisser libre l'accès au moteur et permettre une éventuelle intervention sur celui-ci, ce à quoi sert la tige de la béquille précitée qui pivote comme un compas autour de son point d'articulation et par engagement dans un élément de blocage temporaire sur le capot ou la carrosserie, maintient le capot ouvert.

Le brevet US 6.371.231 illustre une réalisation de ce genre. Des agencements similaires perfectionnés, peuvent aussi consister à munir la tige de la béquille d'un système amortisseur avec deux parties télescopiques, articulées respectivement sur la carrosserie et le capot pour permettre de lever et d'abaisser ce dernier par extension ou rétraction de ce système et permettre, notamment en position ouverte du capot, de le maintenir relevé.

Mais une telle solution est complexe à fabriquer, relativement coûteuse et d'un intérêt pratique secondaire. En ce qui concerne la première, plus simple, elle présente cependant l'inconvénient de nécessiter d'engager un crochet ou analogue prévu en bout de la tige de la béquille, à l'opposé de son point d'articulation, dans un trou de réception d'une patte d'accrochage montée sur le capot ou la carrosserie selon le cas, ce qui exige que l'utilisateur maintienne le capot relevé d'une main pendant qu'il effectue cette opération de l'autre main, ce qui n'est pas particulièrement simple et nécessite en outre un tâtonnement qui n'est pas d'une grande commodité.

La présente invention est relative à un dispositif de maintien en position active, c'est-à-dire relevée d'un capot de véhicule automobile au moyen d'une béquille de support articulée, qui est d'une très grande simplicité de réalisation et qui présente l'avantage de pouvoir automatiquement contrôler l'angle d'ouverture de la béquille et par suite celui que forme le capot avec la carrosserie en position d'ouverture.

A cet effet, le dispositif considéré, comportant une tige allongée, articulée à une de ses extrémités sur le capot du véhicule sous celui-ci et apte à s'appuyer et s'immobiliser sur une partie de la carrosserie à l'autre extrémité afin de maintenir ce capot en position d'ouverture, se caractérise en ce qu'il comporte une patte solidaire du capot et présentant un oeillet cylindrique d'axe transversal dans lequel pénètre la partie terminale de la tige, de préférence coudée à angle droit vis-à-vis de celle-ci pour permettre le libre pivotement de cette tige dans l'oeillet, et une agrafe comprenant un corps muni d'une pince de fixation latérale sur la tige à proximité de sa partie terminale qui pénètre dans l'oeillet, le corps de l'agrafe présentant un talon comportant une face plane inclinée, parallèle à l'axe transversal de l'oeillet et apte à s'appliquer en butée sur la surface du capot, lequel forme alors avec la tige un angle déterminé par l'inclinaison propre de cette face plane.

Lors de l'ouverture du capot, la tige peut ainsi librement pivoter par son extrémité terminale coudée à angle droit sur sa direction longitudinale dans l'oeillet de la patte solidaire du capot, son mouvement étant arrêté par la mise en appui de la face inclinée du talon de l'agrafe portée par la tige contre la surface du capot avec un angle exactement défini, amenant son extrémité opposée en regard d'un logement ou autre moyen d'immobilisation de cette extrémité vis-à-vis de la carrosserie afin de maintenir le capot ouvert.

Selon une disposition préférée de l'invention, l'agrafe portée par la tige est réalisée par moulage d'un matériau plastique rigide.

Avantageusement, le corps de l'agrafe comporte, à l'opposé de sa pince de fixation sur la tige, un rebord s'étendant perpendiculairement à l'axe de l'oeillet, ce rebord étant muni d'un perçage propre à venir s'engager sur le bout de la partie terminale de cette tige dépassant de l'oeillet afin de parfaire l'immobilisation de l'agrafe.

Selon une autre caractéristique, l'oeillet cylindrique de la patte solidaire du capot comporte intérieurement plusieurs portées en saillie, régulièrement réparties autour de son axe, pour centrer la partie terminale de la tige à l'intérieur de l'oeillet.

Selon encore une autre caractéristique, la pince de fixation de l'agrafe sur la tige comporte deux mâchoires souples en regard, enserrant la tige et venues de fabrication avec le corps de l'agrafe.

De préférence, le corps de l'agrafe comporte un évidement ménagé au voisinage de la pince afin d'améliorer la souplesse de celle-ci.

Avantageusement également, le capot comporte un moyen d'immobilisation de la tige à son extrémité opposée à sa partie terminale coudée à angle droit, afin de la maintenir sous le capot lorsque celui-ci est appliqué contre la carrosserie du véhicule.

D'autres caractéristiques d'un dispositif de maintien d'une béquille de support pour le capot d'un véhicule automobile apparaîtront encore à travers la description qui suit d'un exemple de réalisation, donné à titre indicatif et non limitatif, en référence au dessin annexé sur lequel :
- La Figure 1 illustre de façon très schématique un capot de véhicule automobile muni d'une béquille de support établie conformément à l'invention.
- La Figure 2 est une vue en coupe transversale, à plus grande échelle, de l'agrafe portée par la béquille conforme à l'invention, au voisinage de son articulation sur le capot.
- La Figure 3 est une vue en perspective de l'agrafe considérée, montée sur l'extrémité terminale de la tige de la béquille.

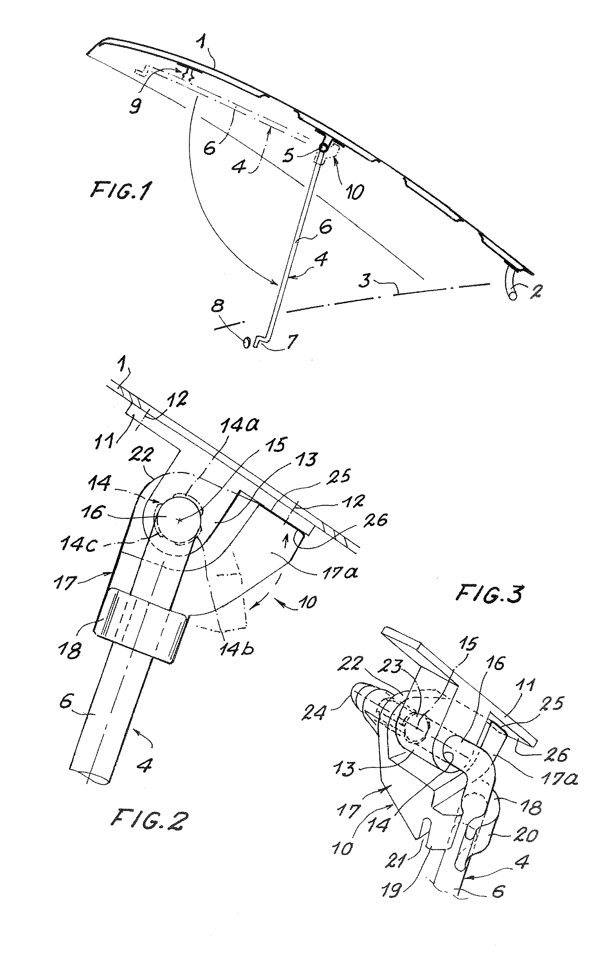

Sur la Figure 1, la référence 1 désigne très schématiquement un capot d'un véhicule automobile monté par l'intermédiaire d'un ensemble d'articulation 2 sur la carrosserie 3 de ce véhicule, en particulier en regard d'une ouverture prévue dans celle-ci pour permettre d'accéder au moteur et autres organes du véhicule, usuellement disposés sous ce capot.

De façon classique, l'ouverture du capot, après déverrouillage d'un moyen de commande (non représenté) actionné par le conducteur depuis l'intérieur du véhicule, s'effectue manuellement en repoussant d'une main ce capot vers le haut, son maintien en position ouverte étant obtenue au moyen d'une béquille 4 qui, dans l'exemple plus spécialement considéré ici, est montée à pivotement autour d'un point d'articulation 5 prévu sous le capot 1.

La béquille 4 se présente de manière également usuellement pratiquée dans la technique, sous la forme d'une tige allongée 6, dont l'extrémité terminale coopère avec le point d'articulation 5 et dont l'extrémité opposée 7 est prévue pour s'engager dans un élément de blocage et d'immobilisation 8 porté par la carrosserie 3, cet élément, schématiquement représenté sous la forme d'un perçage 8 recevant l'extrémité 7 convenablement conformée de la tige 6, pouvant être réalisé sous toute autre forme dont les caractéristiques particulières sont indifférentes à la présente invention.

Sur la Figure 1, la béquille 4 est représentée en traits pleins dans la position où, consécutivement à l'engagement de son extrémité 7 dans le perçage 8, le capot 1 est maintenu ouvert, cette béquille étant également figurée en traits mixtes lorsqu'elle est logée sous le capot, notamment dans sa position inactive, où ce capot est prévu pour être replié sous le bord de la carrosserie 3, la tige 6, pivotée autour de son articulation 5, étant maintenue dans cette position par un crochet ou une pince 9 dont le détail n'importe pas plus à l'invention, le dégagement de la tige hors de cette pince s'effectuant par l'utilisateur lui-même, consécutivement à un très léger effort d'extraction.

Conformément à l'invention, la béquille 4 est munie, au voisinage immédiat de son articulation 5 sous le capot 1, d'une agrafe de butée 10, permettant d'ajuster automatiquement son inclinaison sous le capot dès qu'elle est libérée de sa pince 9 par une main de l'utilisateur une fois le capot ouvert par celui-ci et de venir se positionner en regard immédiat du perçage 8 de la carrosserie 3, sans nécessiter aucun tâtonnement ou effort complémentaire.

Les Figures 2 et 3 illustrent de façon plus détaillée un mode de réalisation préféré de l'agrafe de butée 10 et de la tige 6 de la béquille 4 portant cette agrafe, laquelle est de préférence réalisée par moulage d'un matériau plastique rigide approprié.

Sous le capot 1, est fixée une patte de support 11 par l'intermédiaire de vis 12 ou moyens d'immobilisation similaires, cette patte comportant une chape 13, munie transversalement d'un oeillet cylindrique 14 dont l'axe 15 est sensiblement parallèle au plan du capot.

La tige allongée 6 de la béquille 4 comporte à son extrémité terminale une partie droite 16, coudée à angle droit vis-à-vis de la partie courante de cette tige, cette extrémité terminale étant engagée dans l'oeillet cylindrique 14 afin de permettre le libre débattement de la béquille 4 autour de l'axe 15 de cet oeillet, lorsque la tige 6 est dégagée du crochet 9 qui la maintient normalement sous le capot 1, une fois celui-ci ouvert.

Avantageusement, l'oeillet cylindrique 14 comporte intérieurement plusieurs portées en saillie ou en creux 14a, 14b, 14c, régulièrement réparties autour de son axe 15, pour centrer la partie terminale droite de la tige 6 coudée à angle droit, à l'intérieur de cet oeillet.

L'agrafe 10 comporte un corps 17, muni latéralement d'une pince 18 dont les mâchoires, respectivement 19 et 20, sont aménagées pour venir serrer la tige 6 au voisinage immédiat de sa partie terminale 16, sous l'oeillet cylindrique 14.

Avantageusement, le corps 17 de l'agrafe 10 et la pince 18 sont réalisés d'un seul tenant et venus de fabrication en même temps par moulage du matériau plastique rigide choisi. Une fente 21 est utilement prévue dans le corps 17 pour améliorer la souplesse relative des mâchoires 19 et 20 de la pince 18.

Le corps 17 de l'agrafe 10 comporte par ailleurs un rebord latéral 22, à l'opposé de la pince 18, ce rebord étant muni d'un perçage 23 traversé par l'extrémité de la partie terminale 16 coudée à angle droit de la tige 6, au-delà de l'oeillet 14, afin de maintenir l'agrafe dans sa position sous la patte 11, en évitant que cette agrafe ne glisse sous la tige 6, indépendamment de son serrage par la pince 18. Un capot 24 peut avantageusement parfaire l'immobilisation de l'agrafe vis-à-vis de la tige 6.

L'agrafe 10 est aménagée conformément à l'invention pour présenter, dans le prolongement du corps 17, un talon 17a muni d'une face 25, parallèle à l'axe 15 de l'oeillet 14, cette face étant inclinée vis-à-vis de la surface 26 du capot 1, de sorte que, lorsque la béquille 4 pivote autour de l'axe 15 pour s'appliquer en butée sous cette surface 26 en regard de la patte de support 11, voire directement de la surface du capot 1 contre laquelle est solidarisée cette patte 11, elle impose à la tige 6 de prendre une inclinaison déterminée par rapport à la surface du capot, précisément calculée pour lui permettre de s'immobiliser de la manière déjà dite vis-à-vis de la carrosserie, en regard du perçage 8 ou autre moyen similaire prévu dans la carrosserie 3.

On réalise ainsi un dispositif de maintien en position active d'une béquille de support dont la conception est particulièrement simple et qui présente l'avantage de contrôler immédiatement son angle d'ouverture dès que le capot est ouvert et que cette béquille est libérée de son moyen de verrouillage sous celui-ci, sans aucune intervention complémentaire de l'utilisateur.

Bien entendu, il va de soi que l'invention ne se limite pas à l'exemple de réalisation décrit et représenté ci-dessus ; elle en embrasse au contraire toutes les variantes.

## Revendications

1. Dispositif de maintien en position active d'une béquille de support (4) d'un capot (1) de véhicule automobile, comportant une tige allongée (6), articulée à une de ses extrémités (5) sur le capot du véhicule sous celui-ci et apte à s'appuyer et s'immobiliser sur une partie de la carrosserie (3) de ce véhicule à l'autre extrémité afin de maintenir ce capot en position d'ouverture, **caractérisé en ce qu'**il comporte une patte (11) solidaire du capot (1) et présentant un oeillet cylindrique (14) d'axe transversal (15) dans lequel pénètre la partie terminale droite (16) de la tige, de préférence coudée à angle droit vis-à-vis de celle-ci pour permettre le libre pivotement de cette tige dans l'oeillet, et une agrafe (10) comprenant un corps (17) muni d'une pince (18) de fixation latérale sur la tige (6) à proximité de sa partie terminale qui pénètre dans l'oeillet, le corps de l'agrafe présentant un talon (17a) comportant une face plane inclinée (25), parallèle à l'axe transversal (15) de l'oeillet et propre à s'appliquer en butée sur la surface du capot (1), lequel forme alors avec la tige un angle déterminé par l'inclinaison de cette face plane.

2. Dispositif selon la revendication 1, **caractérisé en ce que** l'agrafe (10) portée par la tige (6) est réalisée de préférence par moulage d'un matériau plastique rigide.

3. Dispositif selon l'une des revendications 1 ou 2, **caractérisé en ce que** le corps (17) de l'agrafe (10) comporte, à l'opposé de sa pince de fixation (18) sur la tige (6), un rebord (22) s'étendant perpendiculairement à l'axe de l'oeillet, ce rebord étant muni d'un perçage (23) recevant l'extrémité de la tige.

4. Dispositif selon l'une quelconque des revendications 1 à 3, **caractérisé en ce que** l'oeillet cylindrique (14) de la patte (11) solidaire du capot (1) comporte intérieurement plusieurs portées en saillie ou en creux (14a, 14b, 14c), régulièrement réparties autour de son axe (15), pour centrer la partie terminale (16) de la tige (6) à l'intérieur de l'oeillet (14).

5. Dispositif selon l'une quelconque des revendications 1 à 4, **caractérisé en ce que** la pince de fixation (18) de l'agrafe (10) sur la tige (6) comporte deux mâchoires souples en regard (19,20), enserrant la tige et venues de fabrication avec le corps (17) de l'agrafe.

6. Dispositif selon la revendication 5, **caractérisé en ce que** le corps (17) de l'agrafe comporte un évidement (21) ménagé au voisinage de la pince (18) afin d'améliorer la souplesse de celle-ci.

7. Dispositif selon l'une quelconque des revendications 1 à 6, **caractérisé en ce que** le capot (1) comporte un moyen d'immobilisation (9) de la tige (6) à son extrémité opposée à sa partie articulée (5) afin de la maintenir sous le capot (1) lorsque celui-ci est en position inactive, appliqué contre la carrosserie (3) du véhicule.
